(19) Europäisches Patentamt
European Patent Office
Office européen des brevets

(11) **EP 4 471 513 A1**

(12) **EUROPÄISCHE PATENTANMELDUNG**

(43) Veröffentlichungstag:
**04.12.2024   Patentblatt 2024/49**

(21) Anmeldenummer: **23177055.3**

(22) Anmeldetag: **02.06.2023**

(51) Internationale Patentklassifikation (IPC):
**G05B 19/042** (2006.01)      **G05B 19/05** (2006.01)
**G06F 8/34** (2018.01)      **G06F 11/36** (2006.01)

(52) Gemeinsame Patentklassifikation (CPC):
**G06F 8/34; G05B 19/0426;** G05B 2219/13044;
G05B 2219/13108

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Lutz, Benjamin**
**76327 Pfinztal (DE)**

(74) Vertreter: **Siemens Patent Attorneys**
**Postfach 22 16 34**
**80506 München (DE)**

(54) **LEITSYSTEM FÜR EINE TECHNISCHE ANLAGE**

(57)    Um bei einem Leitsystem (14) für eine technische Anlage die Bedienung zu erleichtern werden die Visualisierungsinformationen für eine grafische Darbietung der Schrittketten (SK) für einen Bediener der technischen Anlage erweitert, dazu wird den Prozessobjekten (PO) eine Bildreferenz (Ref) zugeordnet, welche als ein Datenarray (DA) aufgebaut ist und zumindest zwei Elemente (E1,E2) umfasst, wobei ein erstes Element (E1) eine Zuordnung zu einem bestimmten Zustandsübergangs-Objekt (ZÜ1,ZÜ2,ZÜ3) und ein zweites Element (E2) eine Zuordnung zu einem bestimmten Anlagenbild (1a,..,1f) aufweist,
wobei der Visualisierungs-Generator (2) weiterhin dazu ausgestaltet ist mittels der Bildreferenz (Ref) für ein bestimmtes Zustandsübergangs-Objekt (ZÜ1,ZÜ2,ZÜ3) auch ein bestimmtes Anlagenbild (1a,...,1f) in die Detaildarstellung (30) oder an separater Stelle einzublenden.

FIG 3

**Beschreibung**

Die Erfindung betrifft ein Leitsystem für eine technische Anlage umfassend ein Automatisierungsgerät, welches ausgestaltet ist, zum Steuern einer technischen Anlage zuvor projektierte oder programmierte Schrittketten mit zuvor projektierten oder programmierten Bausteinen ablaufen zu lassen, den Bausteinen sind Prozessobjekte zugeordnet, wobei die Prozessobjekte Variablen für Prozesswerte umfassen, einen Bedienstation-Server und wenigstens einen mit dem Bedienstation-Server verbundenen Bedienstation-Client, wobei der Bedienstation-Server dazu ausgebildet ist, Visualisierungsinformationen an den Bedienstation-Client zu übertragen, und wobei der Bedienstation-Client dazu ausgebildet ist, mittels der Visualisierungsinformationen eine grafische Darbietung der Schrittketten für einen Bediener der technischen Anlage anzuzeigen, weiterhin umfassend einen Visualisierungs-Generator der dazu ausgestaltet ist auf Basis der zuvor projektierten oder programmierten Bausteine mit ihren Prozessobjekten eine Ansicht von Zuständen und von Zustandsübergängen der Schrittketten zur Laufzeit der Schrittketten in einem Anlagenbild als Zustands-Objekte und Zustandsübergangs-Objekte darzustellen, weiterhin ausgestaltet bei einer Interaktion des Bedieners mit einem Zustandsübergangs-Objekt eine Detaildarstellung vom Zustandsübergang des jeweiligen Zustandsübergangs-Objektes darzustellen.

Im Sinne der Erfindung wird unter Programmierung von Schrittketten das Erstellen eines Anwenderprogramms mit Hilfe eines SFC-Editors für Sequential Function Charts (SFCs) verstanden. In Bausteinen oder SFC-Bausteinen können Berechnungen projektiert werden und in Schritten, Transitionen oder Ablaufketten umgesetzt werden. In der Prozessautomatisierung werden Schrittketten bzw. Ablaufsteuerungen für eine zustands- oder ereignisgesteuerte Ausführung von Produktionsprozessen genutzt. Die SFC Ablaufsteuerung steuert mit CFC (Continious Function Charts) erstellte Funktionen über Betriebs- und Zustandswechsel. SFCs werden in einer Engineering Station projektiert. Die Automatisierungs- und Operator-Station spezifischen Anteile werden ausgehend von einer projektierten Basis kompiliert und von der Engineering Station in das entsprechende Automatisierungsgerät und in den entsprechenden Bedienstation-Server geladen. Durch den Visualisierungs-Generator können Bediener zur Laufzeit die Zustände der Schrittketten und die Zustandsübergänge in den Detaildarstellungen, den sogenannten Lupen, überwachen und bei Bedarf auch manuell eingreifen.

Im Zuge der Bedienung und Beobachtung können die Schrittketten durch Bediener überwacht werden, um in bestimmten Anwendungsfällen auch manuell in die Abläufe eingreifen zu können - z.B. manuelles Schalten einer Transition, Bestätigung einer Transition nach einer Bedienaufforderung, usw..

Nach dem Stand der Technik bieten die visualisierten Schrittketten (SFC Visu) zur Laufzeit neben den eigentlichen Schrittketten auch visualisierte Lupen an, durch die der Bediener auf Grundlage einer Verschaltung erkennen kann, welche Bedingungen für den Übergang in den nächsten Schritt erforderlich sind und inwieweit sie gegenwärtig bereits erfüllt sind.

Die EP 3 528 074 B1 beschreibt ein Verfahren zum Überprüfen der Beziehung zwischen einem visuell auf einem Operator-Client eines Prozessleitsystems dargestellten und einem akustisch ausgegebenen Prozessalarm eines Prozessobjektes.

In der EP 3 067 768 B1 wird eine Automatisierungseinrichtung mit mindestens einem Automatisierungsgerät und einem Operator-System zur Visualisierung und Bedienung von Schrittketten einer Ablaufsteuerung offenbart, wobei während eines RUN-Betriebs des Automatisierungsgerätes aus den Schrittketten erzeugte Objekte verarbeitet werden, wobei die Objekte in das Automatisierungsgerät geladene, mittels eines Continuous Function Chart-Editors erstellte CFC-Funktionen parametrieren und aktivieren und wobei über Prozesswerte und Steuersignale die Interaktion und Verknüpfung zwischen den Objekten und den CFC-Funktionen bewerkstelligt werden.

Die EP 3 968 107 B1 zeigt ein Prozessüberwachungssystem mit zumindest einer ersten Bedieneinheit, welche mit einem Server in Verbindung steht, und der Server weist zur Überwachung einer Automatisierungsanlage einen Visualisierungsservice auf.

Nachteilig an den Prozessüberwachungssystemen ist es, dass es für einen Bediener oftmals schwierig ist aus den Lupen (Signalflussplänen) herauszuerkennen, wie und wann eine Transition, also ein Zustandsübergang erfüllt sein wird, da die logischen Verschaltungen in dem bekannten Detailbild oftmals sehr komplex sind und aus den eingeblendeten aktuellen Werten ist auch kein Trend abzuleiten.

Es ist Aufgabe der vorliegenden Erfindung eine Bedienung von Schrittketten zu verbessern.

Die Aufgabe wird dadurch gelöst, dass den Prozessobjekten eine Bildreferenz zugeordnet ist, welche als ein Datenarray aufgebaut ist und zumindest zwei Elemente umfasst, wobei ein erstes Element eine Zuordnung zu einem bestimmten Zustandsübergangs-Objekt und ein zweites Element eine Zuordnung zu einem bestimmten Anlagenbild aufweist, wobei der Visualisierungs-Generator weiterhin dazu ausgestaltet ist mittels der Bildreferenz für ein bestimmtes Zustandsübergangs-Objekt auch ein bestimmtes Anlagenbild in die Detaildarstellung oder an separater Stelle einzublenden.

Durch diese Erfindung werden detaillierende Lupen von SFC-Schrittketten für eine effizientere und verbesserte Bedienung und Beobachtung verfahrenstechnischer Anlagen eingeführt.

Der Erfinder hat erkannt, dass das Objektmodell der SFC-Lupen zu erweitern ist bzw. die Prozessobjekte mit einer Bildreferenz zu versehen sind, so dass in der Visualisierung dem Bediener mittels der Anzeigemittel nicht nur die komplexen Verschaltungen der Lupen für die Transitionen in den Detailbildern zur Verfügung stehen, sondern darüber hinaus auch Visualisierungen, wie er sie aus den Anlagenbildern her kennt und die ihn dabei unterstützen, die Situation besser und effizienter einschätzen zu können. Beim Öffnen einer Lupe für einen Zustands-Übergang kann nun auf erweiterte Informationen zugegriffen werden und in einer detaillierten Lupen-Darstellung hat der Projekteur eigens für die SFC Lupe erstellte Anlagenbilder nun referenzierbar gemacht.

Eine weitere Ausgestaltung sieht vor, dass der Bedienstation-Server einem Konfigurationsspeicher aufweist, in welchem die um die Bildreferenz erweiterten Prozessobjekte und die weiteren Anlagenbilder abgespeichert sind, dabei ist ein Visualisierungsdienst vorhanden, welcher einen Dynamisierungsdienst, ein Bildschirmobjektmodel und einen Repräsentationsdienst aufweist, der Repräsentationsdienst ist dabei ausgestaltet auf die hinterlegten Informationen im Konfigurationsspeicher zuzugreifen wenn durch den Bediener auf dem Bedienstation-Client in der dargestellten Schrittkette die Detaildarstellung eines Zustandsübergangs-Objektes geöffnet wird und an das Bildschirmobjektmodell weiterzugeben.

Der Dynamisierungsdienst ist dazu ausgestaltet, eine Dynamisierung der in die Detaildarstellung oder an separater Stelle eingeblendeten Anlagenbilder durchzuführen.

Demnach ist das Bildschirmobjektmodell der SFC-Schrittketten mit der Bildreferenz erweitert worden, um in den Lupen Anlagenbildelemente oder ganze Anlagenbilder einbetten zu können. Der Repräsentationsdienst greift auf die hinterlegten Informationen zu den Anlagenbildelementen und Anlagenbildern zu, wenn durch den Bediener die Lupe einer Transition geöffnet wird und speist diese in das Bildschirmobjektmodel für die Visualisierung der Schrittkettenansicht ein.

Die Bedienbarkeit wird weiter verbessert, wenn die weiteren eingeblendeten Anlagenbilder dazu ausgestaltet sind, dem Bediener eine visuelle Rückmeldung zu geben, wann ein Schwellwert für den Zustandsübergang des Zustandsübergangs-Objektes erreicht ist. Durch diese Erfindung kann in der Lupe beispielsweise eine Trendkurve eingefügt werden, anhand derer der Bediener sehr gut abschätzen kann, wann die Schwelle erreicht sein wird.

Weiterhin können in die Detaildarstellung oder an separater Stelle Bedien-Elemente zur Bedienung der Prozessobjekte bzw. zum Verändern der Variablen für die Prozesswerte eingeblendet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, die im Zusammenhang mit den Zeichnungen näher erläutert werden. Es zeigen:

FIG 1    ein erfindungsgemäßes Leitsystem in einer schematischen Darstellung,

FIG 2    eine Datenstruktur und

FIG 3    grafische Oberflächen des Leitsystems.

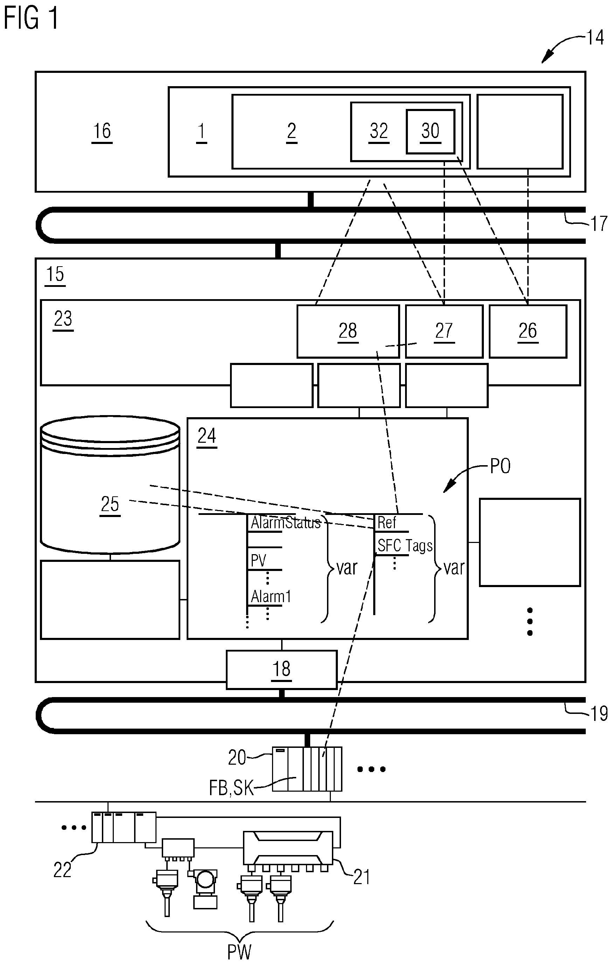

In FIG 1 ist ein Leitsystem 14 für die Bedienung und Beobachtung der als Prozessanlage ausgebildeten technischen Anlage schematisch dargestellt. Das Leitsystem 14 umfasst einen Bedienstation-Server 15 und einen Bedienstation-Client 16. Der eine Bedienstation-Server 15 und der Bedienstation-Client 16 sind über einen Terminalbus 17 miteinander und optional mit nicht dargestellten weiteren Komponenten des Leitsystems 14 wie einem Archivserver oder einem Engineering Station Server verbunden.

Ein Bediener kann zum Zwecke des Bedienens und Beobachtens über den Bedienstation-Client 16 mittels des Terminalbus 17 auf den Bedienstation-Server 15 zugreifen. Der Terminalbus 17 kann, ohne sich darauf zu beschränken, beispielsweise als Industrial Ethernet ausgebildet sein.

Der Bedienstation-Server 15 weist eine Geräteschnittstelle 18 auf, die mit einem Anlagenbus 19 verbunden ist. Über diese Geräteschnittstelle 19 ist der Bedienstation-Server 15 mit einem Automatisierungsgerät 20 sowie mit weiteren Komponenten der verfahrenstechnischen Anlage wie Peripheriegeräten 21,22 verbunden und kann mit diesen kommunizieren. Der Anlagenbus 19 kann, ohne sich darauf zu beschränken, beispielsweise als Industrial Ethernet ausgebildet sein.

Auf dem Bedienstation-Server 15 sind (unter anderem) ein Visualisierungsdienst 23, ein Prozessabbild 24 und ein Konfigurationsspeicher 25 implementiert. Der in dem Bedienstation-Server 15 integrierte Visualisierungsdienst 23 initiiert eine Übertragung von Visualisierungsinformationen an den Bedienstation-Client 16. Der Bedienstation-Client 16 ist dazu ausgebildet, eine Visualisierung, d.h. eine grafische Darbietung, insbesondere von grafischen Repräsentationen technischer Objekte, zum Bedienen und Beobachten der Prozessanlage darzustellen.

Das Automatisierungsgerät 20 ist ausgestaltet zum Steuern der technischen Anlage, dazu werden zuvor projektierte oder programmierte Schrittketten SK mit zuvor projektierten oder programmierte Bausteinen FB in dem Automatisierungsgerät 20, zum Ablauf gebracht.

Den Bausteinen FB sind Prozessobjekte PO zugeordnet, wobei die Prozessobjekte PO Variablen var für Prozesswerte PW umfassen.

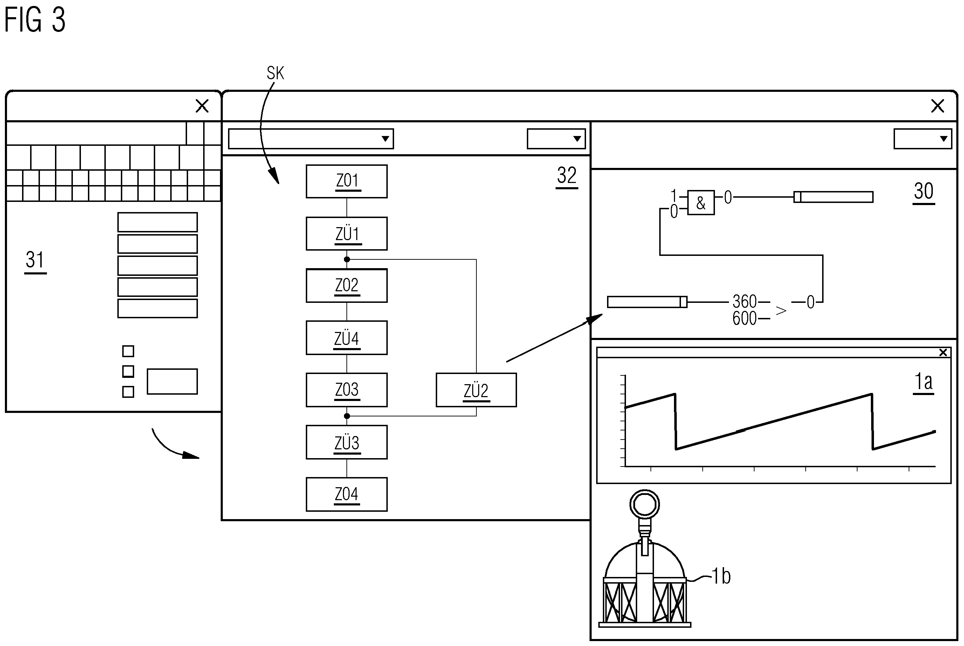

Der Visualisierungs-Generator 2 ist dazu ausgestaltet auf Basis der zuvor projektierten oder programmierten Bausteine FB mit ihren Prozessobjekten PO eine Ansicht von Zuständen und von Zustandsübergängen, siehe hierzu FIG 3, der Schrittketten SK zur Laufzeit der Schrittketten SK in einem Anlagenbild 1 als Zustands-Objekte ZO1,ZO2,ZO3,ZO4 und Zustandsübergangs-Objekte ZÜ1,ZÜ2,ZÜ3,ZÜ4 darzustellen, weiterhin ausgestaltet bei einer Interaktion des Bedieners mit einem Zustandsübergangs-Objekt ZÜ1,ZÜ2,ZÜ3 eine Detaildarstellung 30 vom Zustandsübergang des jeweiligen Zustandsübergangs-Objektes ZÜ1,ZÜ2,ZÜ3 darzustellen.

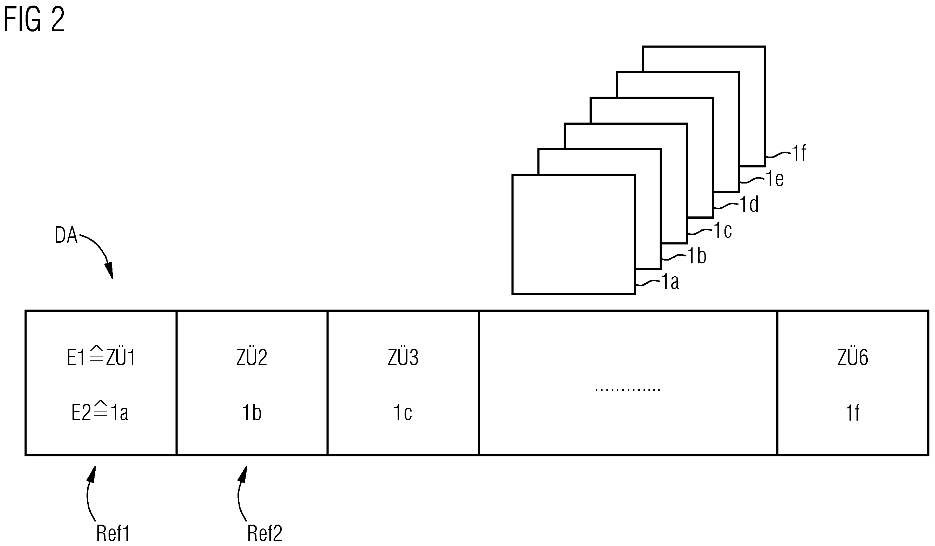

Gemäß FIG 1 ist den Prozessobjekten PO eine Bildreferenz Ref zugeordnet, welche als ein Datenarray DA, siehe FIG 2 aufgebaut ist und zumindest zwei Elemente E1,E2 umfasst, wobei ein erstes Element E1 eine Zuordnung zu einem bestimmten Zustandsübergangs-Objekt ZÜ1,ZÜ2,ZÜ3 und ein zweites Element E2 eine Zuordnung zu einem bestimmten Anlagenbild 1a,...,1f aufweist, wobei der Visualisierungs-Generator 2 weiterhin dazu ausgestaltet ist, mittels der Bildreferenz Ref für ein bestimmtes Zustandsübergangs-Objekt ZÜ1,ZÜ2,ZÜ3 auch ein bestimmtes Anlagenbild 1a,...,1f in die Detaildarstellung 30 oder an separater Stelle einzublenden.

In dem Konfigurationsspeicher 25 sind die um die Bildreferenz Ref erweiterten Prozessobjekte PO und die weiteren Anlagenbilder 1a,...,1f abgespeichert. Der Visualisierungsdienst 23 arbeitet mit dem Dynamisierungsdienst 26, dem Bildschirmobjektmodell 27 und einen Repräsentationsdienst 28 zusammen. Der Repräsentationsdienst 28 ist dabei ausgestaltet auf die hinterlegten Informationen im Konfigurationsspeicher 25 zuzugreifen, wenn durch den Bediener auf dem Bedienstation-Client 16 in der dargestellten Schrittkette SK die Detaildarstellung 30 eines Zustandsübergangs-Objektes ZÜ1,ZÜ2,ZÜ3 geöffnet wird, und die Daten, insbesondere die Bildreferenz Ref an das Bildschirmobjektmodell 27 weiterzugeben. Der Dynamisierungsdienst 26 ist dazu ausgestaltet, eine Dynamisierung der in die Detaildarstellung 30 oder an separater Stelle eingeblendeten Anlagenbilder 1a,...,1f durchzuführen.

In der FIG 2 ist das Datenarray DA dargestellt. Das Datenarray DA ist als ein zweidimensionales Datenarray DA mit einem ersten Element E1 und einem zweiten Element E2 aufgebaut. Das erste Element E1 enthält eine Zuordnung zu einem bestimmten Zustandsübergangs-Objekt ZÜ1,...,ZÜ6 auf. Das zweite Element E2 weist eine Zuordnung zu einem bestimmten Anlagenbild 1a,...,1f auf. Speziell für dieses Datenarray DA können somit sechs Zustandsübergangs-Objekte ZÜ1,...,ZÜ6 entsprechend sechs unterschiedliche Anlagenbilder 1a,...,1f zugeordnet werden.

Mit der FIG 3 sind unterschiedliche Ansichten, wie sie in einem Anlagenbild 1 eines Bedienstation-Client 16 auftauchen können, dargestellt. Eine Bausteinansicht 31 zeigt ein standardisiertes Interface für die Steuerung eines SFCs durch das Anwenderprogramm oder einen Anwender. Im Fachterminus wird die Bausteinansicht 31 auch Face Plate genannt. In der Bausteinansicht 31 gibt es dann beispielsweise in einer Alarmzeile ein Schaltknöpfchen mit denen man eine Schrittkettenansicht 32 aufrufen kann. In der Schrittkettenansicht 32 ist eine Schrittkette SK dargestellt. Die Schrittkette SK bzw. die Ablaufkette startet immer mit einem Startzustand und endet mit einem Endzustand. In diesem Beispiel bildet der Start ein erstes Zustandsobjekt ZO1 und das Ende ein viertes Zustandsobjekt ZO4. Dazwischen liegen ein zweites Zustandsobjekt ZO2 und ein drittes Zustandsobjekt ZO3. Um vom ersten Zustandsobjekt ZO1 zu dem zweiten Zustandsobjekt ZO2 zu gelangen, muss ein Zustandsübergangs-Objekt ZÜ1 durchlaufen werden. Um vom zweiten Zustandsübergangs-Objekt ZO2 zum dritten Zustandsübergangs-Objekt ZO3 zu gelangen, muss ein viertes Zustandsübergangs-Objekt ZÜ4 durchlaufen werden, wodurch ebenfalls das Ende der Schrittkette SK erreicht wird. In dem gewählten Beispiel gibt es zwischen dem ersten ZustandsObjekt ZO1 und dem dritten Zustandsübergangs-Objekt ZÜ3 ein zweites Zustandsübergangs-Objekt ZÜ2, welches eine zweite Transition darstellt. Angenommen der Prozess befindet sich gerade mit seinen Prozessobjekten PO und seinen Variablen var in dem zweiten Zustandsübergangs-Objekt ZÜ2, so kann jetzt ein Bediener mit dem zweiten Zustandsübergangs-Objekt ZÜ2 interaktiv agieren und dementsprechend eine Detaildarstellung 30 aufrufen. Nach dem Stand der Technik konnte ein Bediener aber mit der Detaildarstellung 30 nicht viel anfangen. Erfindungsgemäß wird nun zusätzlich mittels der Bildreferenz Ref ein erstes Anlagenbild 1a und ein zweites Anlagenbild 1b in die Detailansicht 30 eingeblendet.

Wie dargestellt kann durch diese Erfindung mit den zusätzlichen Anlagenbildern 1a,1b dem Bediener eine Trendkurve präsentiert werden, mit welcher er gut abschätzen kann, wann die zu erwartende Transitions-Schwelle erreicht ist. Zusätzlich wird mit dem zweiten Anlagenbild 1b gezeigt, dass es sich hier um einen Tank handelt.

Das Ausführungsbeispiel gemäß der FIG 3 zeigt den Nutzen und die Anwendung der Erfindung. Der Zustandswechsel in der Schrittkette SK hängt von einem Überschreiten eines Füllstandes eines Tanks ab, wie in der Lupe dargestellt. Durch die Ausgabe des aktuellen Füllstands in der Lupe kann der Bediener erkennen wie hoch dieser gegenwärtig ist, jedoch kann er schwer abschätzen, wann die Schwelle erwartungsgemäß erreicht sein wird. Mit dem zusätzlichen Einblenden der Trendkurve kann er dies nun besser abschätzen.

Weitere Vorteile sind, dass Lupen von Schrittketten im Sinne der Bedienung und Beobachtung höhergradig detailliert werden können. Transitionen bzw. Zustandsübergänge können effizienter bedient und beobachtet werden, da neben dem visualisierten SFC mit einer Bausteinansicht 31 mit Schrittkette SKund Lupe keine weiteren Anlagenbilder, Controls usw. notwendig sind, um effizient und sicher Transitionen zu beobachten oder auch bedienen zu können, weil diese nun alle schon vorliegen und anhand der Bildreferenz eingeblendet werden können.

Ein Datenarray DA könnte so geschrieben werden:

```
Display Ref = {(Transistion1, Plant Display1);(Transition2,
PlantDisplay2)}
```

Definition:

Eine Schrittkette ist eine alternierende Aneinanderreihung von Schritten, die jeweils bestimmte Aktionen auslösen, und Transitionen, welche den Wechsel von einem Schritt in einen anderen veranlassen, sobald die entsprechende Weiterschaltbedingung erfüllt ist. Jede Schrittkette besitzt genau einen Start-Schritt und einen Ende-Schritt sowie zusätzlich beliebig viele Zwischenschritte, die jeweils durch gerichtete Kanten über zwischengeschaltete Transitionen

**Patentansprüche**

1. Leitsystem (14) für eine technische Anlage umfassend ein Automatisierungsgerät (20), welches ausgestaltet ist zum Steuern einer technischen Anlage zuvor projektierte oder programmierte Schrittketten (SK) mit zuvor projektierten oder programmierten Bausteinen (FB) ablaufen zu lassen,

   den Bausteinen (FB) sind Prozessobjekte (PO) zugeordnet, wobei die Prozessobjekte (PO) Variablen (var) für Prozesswerte (PW) umfassen,
   einen Bedienstation-Server (15) und wenigstens einen mit dem Bedienstation-Server (15) verbundenen Bedienstation-Client (16), wobei der Bedienstation-Server (15) dazu ausgebildet ist, Visualisierungsinformationen an den Bedienstation-Client (16) zu übertragen,
   und wobei der Bedienstation-Client (16) dazu ausgebildet ist, mittels der Visualisierungsinformationen eine grafische Darbietung der Schrittketten (SK) für einen Bediener der technischen Anlage anzuzeigen, weiterhin umfassend
   einen Visualisierungs-Generator (2) der dazu ausgestaltet ist auf Basis der zuvor projektierten oder programmierten Bausteine (FB) mit ihren Prozessobjekten (PO) eine Ansicht von Zuständen und von Zustandsübergängen der Schrittketten (SK) zur Laufzeit der Schrittketten in einem Anlagenbild (1) als Zustands-Objekte (ZO1,ZO2,ZO3) und Zustandsübergangs-Objekte (ZÜ1,ZÜ2,ZÜ3) darzustellen, weiterhin ausgestaltet bei einer Interaktion des Bedieners mit einem Zustandsübergangs-Objekt (ZÜ1,ZÜ2,ZÜ3) eine Detaildarstellung (30) vom Zustandsübergang des jeweiligen Zustandsübergangs-Objektes (ZÜ1,ZÜ2,ZÜ3) darzustellen,
   **dadurch gekennzeichnet, dass** den Prozessobjekten (PO) eine Bildreferenz (Ref) zugeordnet ist, welche als ein Datenarray (DA) aufgebaut ist und zumindest zwei Elemente (E1,E2) umfasst, wobei ein erstes Element (E1) eine Zuordnung zu einem bestimmten Zustandsübergangs-Objekt (ZÜ1,ZÜ2,ZÜ3) und ein zweites Element (E2) eine Zuordnung zu einem bestimmten Anlagenbild (1a,..,1f) aufweist,
   wobei der Visualisierungs-Generator (2) weiterhin dazu ausgestaltet ist mittels der Bildreferenz (Ref) für ein bestimmtes Zustandsübergangs-Objekt (ZÜ1,ZÜ2,ZÜ3) auch ein bestimmtes Anlagenbild (1a,...,1f) in die Detaildarstellung (30) oder an separater Stelle einzublenden.

2. Leitsystem nach Anspruch 1, wobei der Bedienstation-Server (15) einem Konfigurationsspeicher (25) aufweist, in welchem die um die Bildreferenz (Ref) erweiterten Prozessobjekte (PO) und die weiteren Anlagenbilder (1a,...,1f) abgespeichert sind, dabei ist ein Visualisierungsdienst (23) vorhanden, welcher

   einen Dynamisierungsdienst (26),
   ein Bildschirmobjektmodell (27) und
   einen Repräsentationsdienst (28) aufweist,
   der Repräsentationsdienst (28) ist dabei ausgestaltet auf die hinterlegten Informationen im Konfigurationsspeicher (25) zuzugreifen, wenn durch den Bediener auf dem Bedienstation-Client (16) in der dargestellten Schrittkette (SK) die Detaildarstellung (30) eines Zustandsübergangs-Objektes (ZÜ1,ZÜ2,ZÜ3) geöffnet wird und an das Bildschirmobjektmodell (27) weiterzugeben.

3. Leitsystem nach Anspruch 2, wobei der Dynamisierungsdienst (26) dazu ausgestaltet ist, eine Dynamisierung der in die Detaildarstellung (30) oder an separater Stelle eingeblendeten Anlagenbilder (1a,...,1f) durchzuführen.

4. Leitsystem nach einem der Ansprüche 1 bis 3, wobei die weiteren eingeblendeten Anlagenbilder (1a,...,1f) dazu ausgestaltet sind, dem Bediener eine visuelle Rückmeldung zu geben wann ein Schwellwert für den Zustandsübergang des Zustandsübergangs-Objektes (ZÜ1,ZÜ2,ZÜ3) erreicht ist.

5. Leitsystem nach einem der Ansprüche 1 bis 4, wobei in die Detaildarstellung (30) oder an separater Stelle Bedien-Elemente zur Bedienung der Prozessobjekte (PO) bzw. zum Verändern der Variablen (var) für die Prozesswerte (PW) eingeblendet sind.

FIG 1

EP 4 471 513 A1

# FIG 2

| E1≙ZÜ1 | ZÜ2 | ZÜ3 | ............ | ZÜ6 |
|---|---|---|---|---|
| E2≙1a | 1b | 1c | | 1f |

DA

1a 1b 1c 1d 1e 1f

Ref1  Ref2

# FIG 3

SK

Z01
ZÜ1
Z02
ZÜ4
Z03 — ZÜ2
ZÜ3
Z04

32

31

30

1a

1b

EP 4 471 513 A1

Europäisches Patentamt

European Patent Office

Office européen des brevets

**EUROPÄISCHER RECHERCHENBERICHT**

**Nummer der Anmeldung**

**EP 23 17 7055**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 351 109 A1 (SIEMENS AG [DE]) 8. Oktober 2003 (2003-10-08) | 1,5 | INV. G05B19/042 |
| A | * das ganze Dokument * | 2-4 | G05B19/05 G06F8/34 |
| | ----- | | G06F11/36 |
| X | N N N ET AL: "GRAPH 5 Ablaufsteuerungen graphisch programmieren unter dem Betriebssystem S5-DOS", , 1. Januar 1991 (1991-01-01), Seiten 1-156, XP093099915, Gefunden im Internet: URL:https://support.industry.siemens.com/cs/attachments/19374689/Graph5_v30_d_OCR.pdf [gefunden am 2023-11-09] | 1,5 | |
| A | * das ganze Dokument * | 2-4 | |
| | ----- | | |
| A | EP 1 241 568 A2 (SIEMENS AG [DE]) 18. September 2002 (2002-09-18) * das ganze Dokument * | 1-5 | |
| | ----- | | |

**RECHERCHIERTE SACHGEBIETE (IPC)**

G05B
G06F

Der vorliegende Recherchenbericht wurde für alle Patentansprüche erstellt

| Recherchenort | Abschlußdatum der Recherche | Prüfer |
|---|---|---|
| Den Haag | 10. November 2023 | Kielhöfer, Patrick |

EPO FORM 1503 03.82 (P04C03)

# EP 4 471 513 A1

## ANHANG ZUM EUROPÄISCHEN RECHERCHENBERICHT
## ÜBER DIE EUROPÄISCHE PATENTANMELDUNG NR.

EP 23 17 7055

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-11-2023

| Im Recherchenbericht angeführtes Patentdokument | Datum der Veröffentlichung | Mitglied(er) der Patentfamilie | Datum der Veröffentlichung |
|---|---|---|---|
| EP 1351109 A1 | 08-10-2003 | DE 10215196 A1 | 30-10-2003 |
| | | EP 1351109 A1 | 08-10-2003 |
| | | US 2003191545 A1 | 09-10-2003 |
| EP 1241568 A2 | 18-09-2002 | AT E267416 T1 | 15-06-2004 |
| | | DE 10112262 A1 | 26-09-2002 |
| | | EP 1241568 A2 | 18-09-2002 |
| | | ES 2220847 T3 | 16-12-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3528074 B1
- EP 3067768 B1
- EP 3968107 B1